# EUROPEAN PATENT SPECIFICATION

(11) **EP 2 082 850 B1**
(45) Date of publication and mention of the grant of the patent: **25.05.2011**
(21) Application number: 08020097.5
(22) Date of filing: 18.11.2008
(51) Int. Cl.: B25J 9/16, G05B 19/408

(54) **Generating device of processing robot program**
Erzeugungsvorrichtung eines verarbeitenden Roboterprogramms
Dispositif de génération de programme de robot de traitement

(30) Priority: 23.01.2008 JP 2008012736
(43) Date of publication of application: 29.07.2009
(73) Proprietor: FANUC CORPORATION, Oshino-mura Minamitsuru-gun Yamanashi 401-0597 (JP)
(72) Inventor: Nagatsuka, Yoshiharu, Minamitsuru-gun Yamanashi 401-0597 (JP); Inoue, Kozo, Minamitsuru-gun Yamanashi 401-0597 (JP); Atohira, Hiroyuki, Minamitsuru-gun Yamanashi 401-0597 (JP)
(74) Representative: Thum, Bernhard

(56) References cited:
- EP-A2- 1 628 177
- JP-A- 5 165 509

## Description

### RELATED APPLICATIONS

The present application claims priority from Japanese Patent Application No. 2008-12736, filed on January 23, 2008.

### BACKGROUND OF THE INVENTION

### 1. Field of the Invention

The present invention relates to a method for correcting a processing robot program for carrying out processing such as burring, by using a robot.

### 2. Description of the Related Art

In the prior art, when a workpiece is processed after the position and orientation of the workpiece is detected in a robot system having a vision sensor, the vision sensor captures an image of the shape of the workpiece. Then, the difference in the images between the detected workpiece and a reference workpiece is calculated, by which each teaching position in a processing program is corrected in order to accommodate a positional error of the workpiece.

In some techniques, when the workpiece is captured by a vision sensor attached to a robot, the position and orientation of the robot, where the vision sensor may capture the workpiece, is finely adjusted by an operation such as a jog operation, in order to make a program for moving the robot to the imaging position. In some other techniques, a vision sensor does not detect the height of a surface of the workpiece to be processed relative to a reference surface, and the workpiece may be processed without correcting the position and orientation of a tool of a robot.

Various techniques, regarding burring using a robot, have been proposed. For example, Japanese Unexamined Patent Publication (Kokai) No. 5-31659 discloses a burring device and method capable of visually recognizing only a region of a workpiece where a burr may be generated, by utilizing design information of an ideal shape of the workpiece. Japanese Unexamined Patent Publication (Kokai) No. 5-31659 also discloses a technique to generate a robot path based on drawing information including a free curve portion generated by a CAD system or the like, in order to simply an operation offline. On the other hand, Japanese Unexamined Patent Publication (Kokai) No. 5-233048 discloses a technique to generate path teaching data for carrying out burring/polishing against various types of workpiece having a complicated ridge line.

EP 1 628 177 A2 discloses a finishing machine for removing a burr in which a target shape of a workpiece is obtained from CAD data. The target shape is stored in a control unit and is made as the tracing route for removing the burr. The actual position of a workpiece is obtained by a camera of a visual sensor arrangement at a predetermined position. Then, a deviation between the CAD data of the workpiece and the obtained position of the workpiece is found and the tracing route is corrected on the basis of the deviation of the CAD data and the obtained position.

In the prior art, it is possible to detect the position and orientation of a workpiece by means of a vision sensor, in order to process the workpiece in view of a positional error of the workpiece. However, it is not possible to process the workpiece in view of a manufacturing error or an error in the shape of the workpiece. Therefore, it is difficult to process the workpiece while the tool of the robot precisely traces the shape of the workpiece.

When the workpiece is captured by a vision sensor attached to a robot, it is necessary to finely adjust the position and orientation of the robot in order to determine the imaging position, which requires many man-hours.

Further, when the workpiece is processed without correcting the position and orientation of the tool of the robot, the tool may interfere with the workpiece and therefore the tool cannot process the workpiece.

### SUMMARY OF THE INVENTION

Accordingly, an object of the present invention is to provide a method for correcting a processing robot program used in a robot system having a vision sensor, capable of accommodating an error in the shape of a workpiece and reducing man-hours required for a teaching operation, according to any of the claims 1 to 3.

According to the present invention there is also provided a generating device of a processing robot program, comprising means for carrying out any one of the methods according to any one of the claims 1 to 3.

### BRIEF DESCRIPTION OF THE DRAWINGS

The above and other objects, features and advantages of the present invention will be made more apparent by the following description of the preferred embodiments thereof, with reference to the accompanying drawings, wherein:
- Fig. 1: is a diagram schematically showing one embodiment of a robot program generating device according to the invention;
- Fig. 2: is a flowchart showing a procedure by the program generating device of Fg. 1;
- Fig. 3: shows an example in which a processing line in a workpiece is divided into a plurality of segments;
- Fig. 4: shows a diagram explaining an image detection model of the workpiece;
- Fig. 5: shows an example of a processing program including data of teaching points of the workpiece;
- Fig. 6: shows an example in which each part of the workpiece corresponding to the image detection model is actually detected by a vision sensor, and also shows an example of a detection program therefor;
- Fig. 7: shows an example of a calculation program for calculating an amount of change of a difference between an image of the workpiece actually obtained by the vision sensor and the image detection model of the workpiece;
- Fig. 8: is similar to Fig. 1 and shows an example in which a tool is attached to a robot;
- Fig. 9: is a flowchart showing an example of a procedure for adjusting the height of the position of the vision sensor;
- Fig. 10: shows an example in which the vision sensor is moved generally directly above the workpiece;
- Fig. 11: shows an example in which the horizontal position of the vision sensor is adjusted;
- Fig. 12: shows an example in which the position and orientation of the vision sensor are adjusted;
- Fig. 13: shows a state in which the tool interferes with a reference surface of the workpiece;
- Fig. 14: is a flowchart showing an example of a procedure for adjusting the position and orientation of the tool at a teaching point;
- Fig. 15: shows a diagram indicating an image detection model of the workpiece;
- Fig. 16: shows an example in which the workpiece is actually detected by the vision sensor;
- Fig. 17a: shows an example in which the height of the position of the tool is adjusted;
- Fig. 17b Fig. 18: shows an example in which the orientation of the tool is adjusted; and is a block diagram showing the robot program generating device according to the invention.

### DETAILED DESCRIPTION

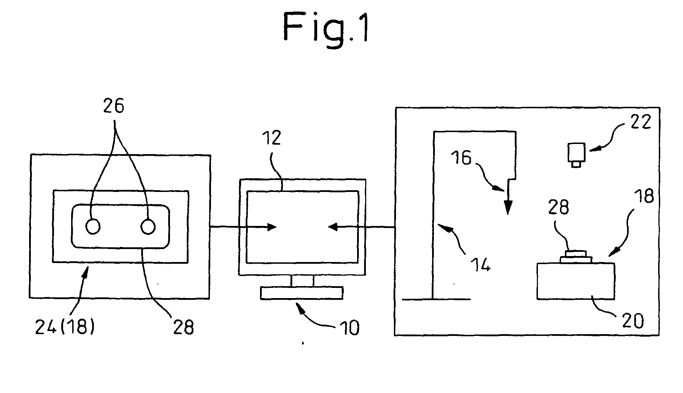

Concretely, a robot program generating device for processing according to the present invention may be a personal computer (hereinafter, referred to as a "PC") as schematically shown in Fig. 1. PC 10 has a display 12 capable indicating three-dimensional models of a robot 14, a tool 16 attached to robot 14 for processing, a workpiece 18 to be processed, a pedestal or a jig 20 for loading workpiece 18 thereon, and a vision sensor 22 having a virtual camera for imaging workpiece 18 in PC 10. Display 12 of PC 10 can also indicate a graphic image of a three-dimensional model of workpiece 18 (in an illustrated embodiment, an image of workpiece 18 viewed from the above) captured by virtual camera 22.

In the illustrated embodiment, workpiece 18 has features, for example two holes 26, for differentiating it from other workpieces. Workpiece 18 also has a processing line 28 or a site to be processed, which is used when the workpiece is processed (for example, burred) by using tool 16.

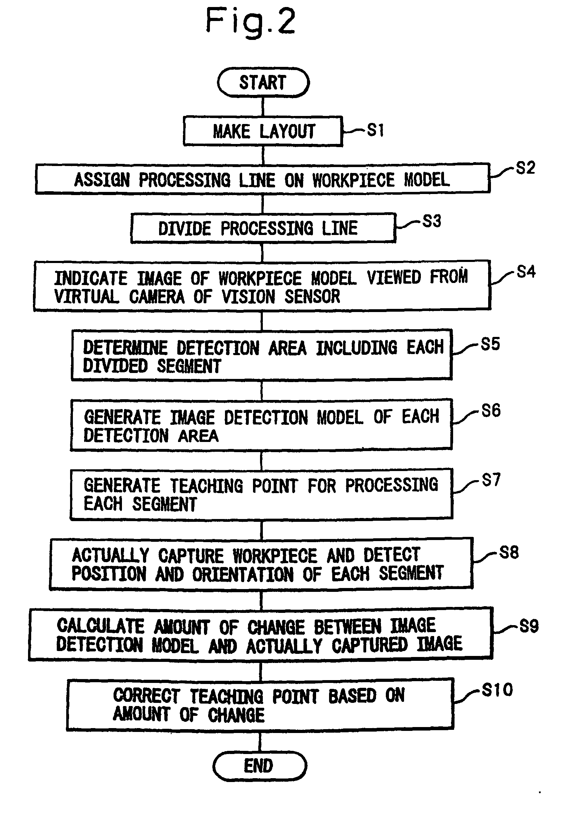

A procedure carried out by PC 10 will be explained with reference to the flowchart shown in Fig. 2. First, in step S1, three-dimensional models of elements such as robot 14 are indicated or located on the display so as to make a layout as shown in Fig. 1. Then, in step S2, a processing line 28 is assigned on workpiece 18 which is used when the workpiece is actually processed by tool 16.

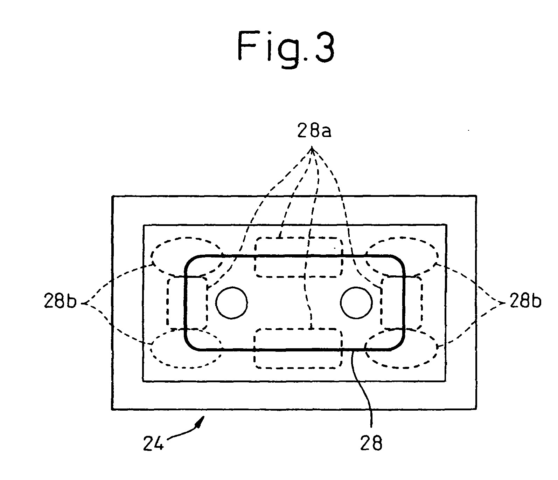

In the next step S3, processing line 28 is divided into a plurality of line segments based on the shape of the processing line, as shown in Fig. 3. Concretely, processing line 28 is divided into segments each having a simple shape, such as a corner, a straight line and/or a curved line. In an example of Fig. 3, processing line 28 is divided into four straight line segments 28a and four rounded corner segments 28b.

In the next step S4, in the layout as described above, a graphic image of workpiece 18 viewed from virtual camera 22 is indicated on the display. Then, detection areas are determined in the graphic image viewed from virtual camera 22 such that each segment of the processing line generated in step S3 is included in the detection areas (step S5). At this point, since a teaching point included in the processing line is corrected in each divided segment as described below, it is preferable that there is a one-on-one relationship between each detection area and each segment.

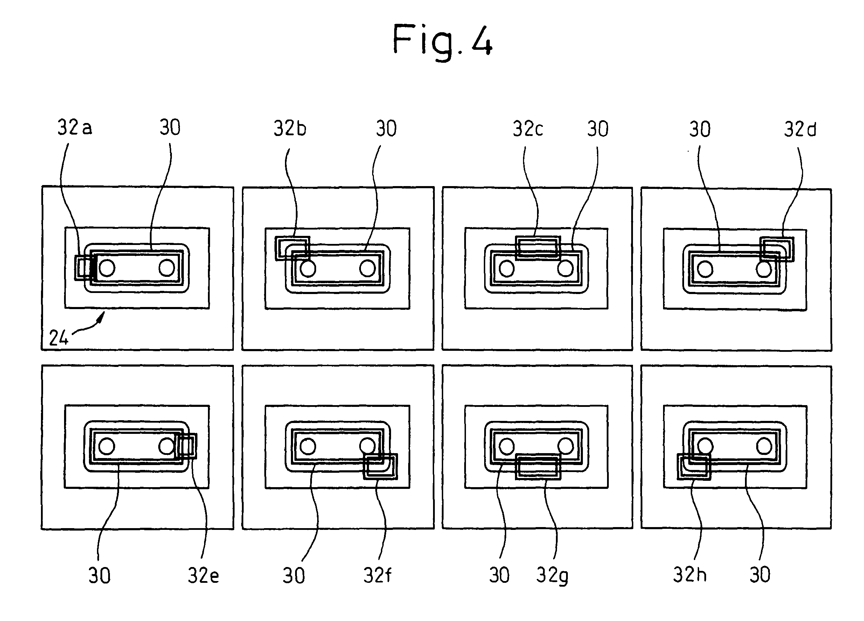

In the next step S6, in order to actually detect the detection areas obtained in step S5 by using a vision sensor such as a camera, image detection models, each including each detection area, are generated in graphic image 24 of workpiece 18 viewed from virtual camera 22, as shown in Fig. 4. As illustrated by using double-lined frames, the image detection models includes a model 30 for detecting features or holes 26, and models 32a to 32h for detecting each detection area.

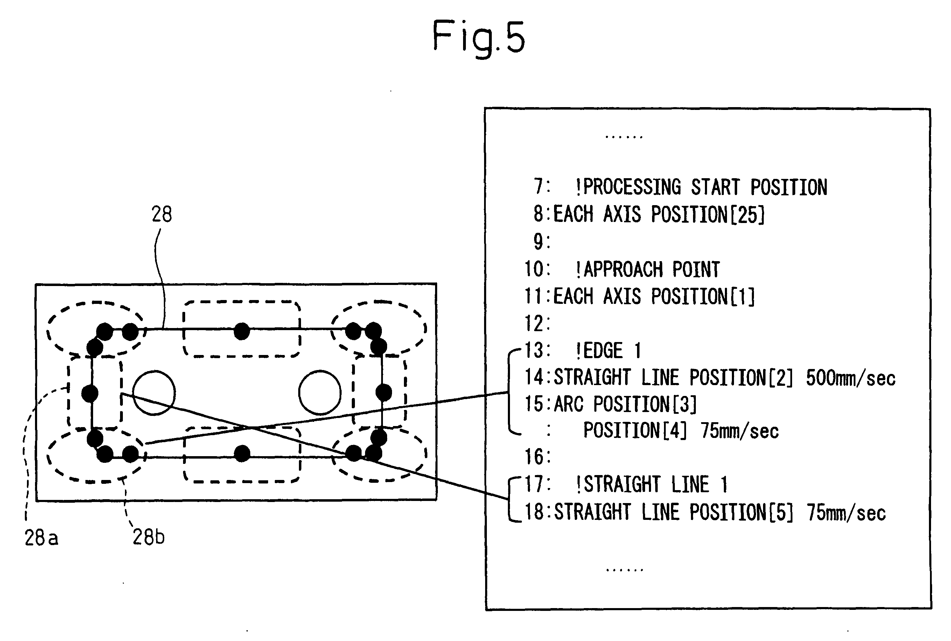

In the next step S7, in order to generate a program by which a robot can actually process a workpiece, a processing program, including data of teaching points for processing the segments of processing line 28 of workpiece 18 as shown in Fig. 5, is generated. In an example of Fig. 5, one teaching point is set to each straight line segment 28a and three teaching points are set to each corner segment. Then, a processing program, including a command line assigning the position of each teaching point and a processing speed at each teaching point, etc., is generated. The teaching points may be automatically set corresponding to the shape of each segment, otherwise, may be timely input by an operation such as a mouse click motion by an operator.

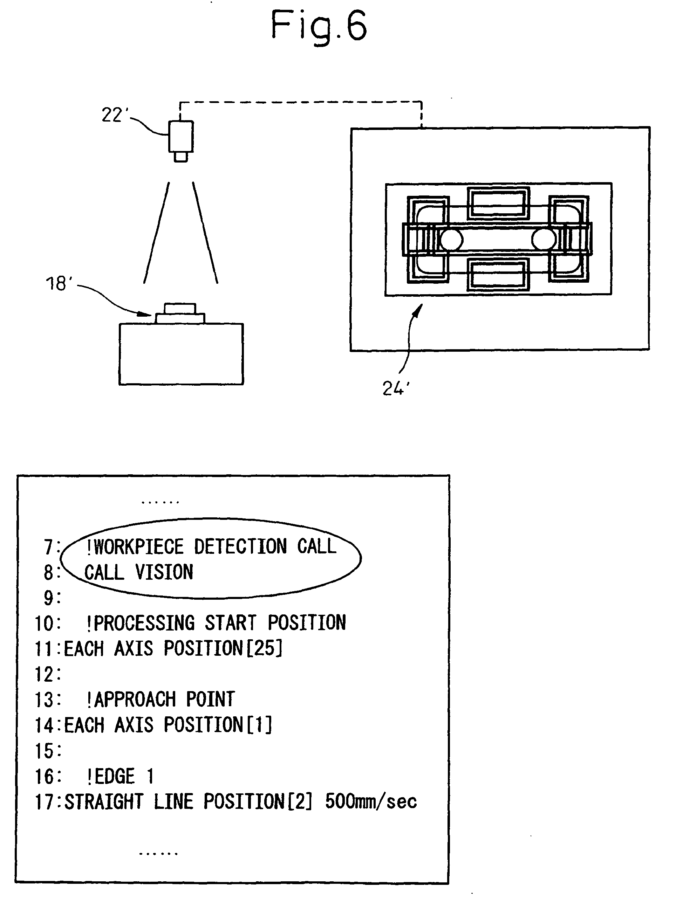

In the next step S8, a detection program is generated, by which a workpiece 18' to be processed is actually imaged or captured by a vision sensor such as a camera 22' corresponding to virtual camera 22, in the similar positional relationship of the layout as generated in step S1, as shown in Fig. 6, and the position and orientation of each segment of workpiece 18' corresponding to each detection model generated in step S6 are detected. Further, a command line for calling the detection program is inserted into the above processing program. Fig. 6 shows an image obtained by the vision sensor and an example of a program into which the detection program (in the example, named as "VISION") is inserted.

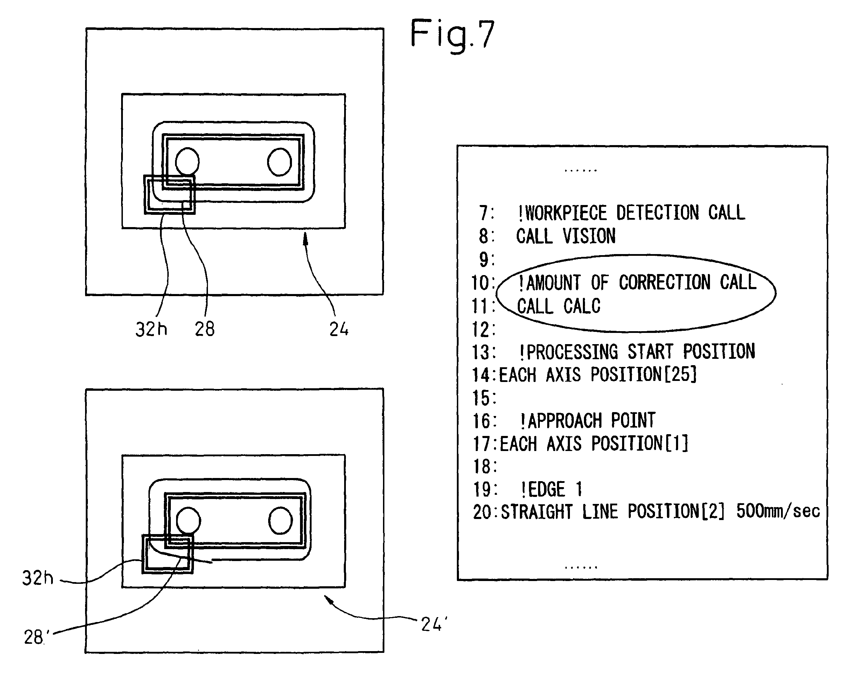

In the next step S9, a command line, for calculating and obtaining an amount of change or a difference between the detection model and the actually captured image of the workpiece by the vision sensor, in relation to the position and the orientation of each segment, is generated and added to the processing program. There are two methods for calculating and obtaining the amount of change, i.e., a method for obtaining correction data as the amount of change of the position and orientation, by a command in a detection program for detecting the position and orientation of each segment of the workpiece; and another method for generating a calculation program (for example, named as "CALC") for calculating the position and orientation of each segment as shown in Fig. 7, and inserting a command calling the calculation program into the processing program. In an example of Fig. 7, in a image detection model 32h, the position or orientation of a processing line 28', included in a graphic image 24' of workpiece 18' actually captured by vision sensor 22', is different from the position or orientation of processing line 28 obtained by the virtual camera. In such a case, in the above calculation "CALC", the difference or the amount of change between the graphic images 24' and 24, at each teaching point or some certain point on the processing line in detection model 32h, is calculated.

Finally, in step S10, based on the amount of change calculated in step S9, a correction program is inserted into the processing program, the correction program being capable of correcting the teaching point for processing each segment such as a corner or a straight line. Due to this, an actual trajectory of the tool relative to the workpiece at each segment is corrected.

According to the present invention, the amount of change of the position and orientation is calculated by comparing the image detection model of the three-dimensional model of the workpiece obtained by the virtual camera to the image of the workpiece actually captured by the vision sensor, and then the teaching point is corrected based on the amount of change. Therefore, even when the actual workpiece has a shape error, the shape error may be accommodated and the workpiece may be correctly processed along a desired processing line, whereby a processing accuracy of the workpiece may be significantly improved.

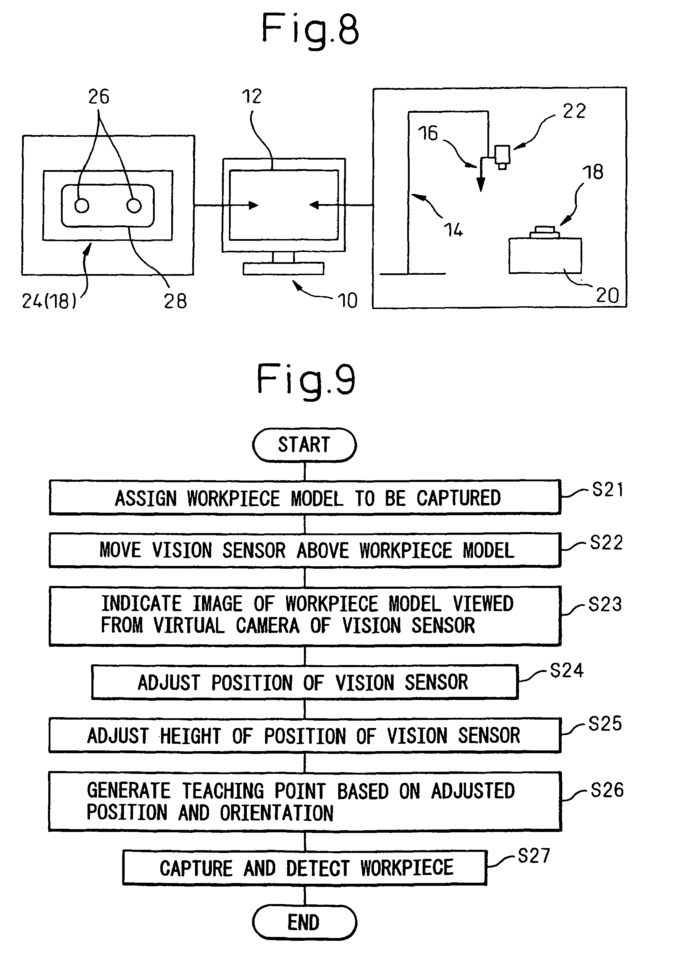

In the above embodiment, the robot for carrying out processing and the vision sensor for capturing the workpiece are independently arranged. However, as in a preferred modification of Fig. 8, an imager such as a camera 22 may be attached to a robot 14 for processing a workpiece 18, whereby the position of the camera may be adjusted. In this case, the processing program of the invention may further generate an imager movement program using the robot. Hereinafter, the procedure for generating the movement program will be explained with reference to a flowchart as shown in Fig. 9.

First, in step S21, a three-dimensional model of a workpiece is assigned in PC 10. This assignment may be executed, for example, by mouse-clicking a workpiece to be assigned among workpieces indicated on display 12.

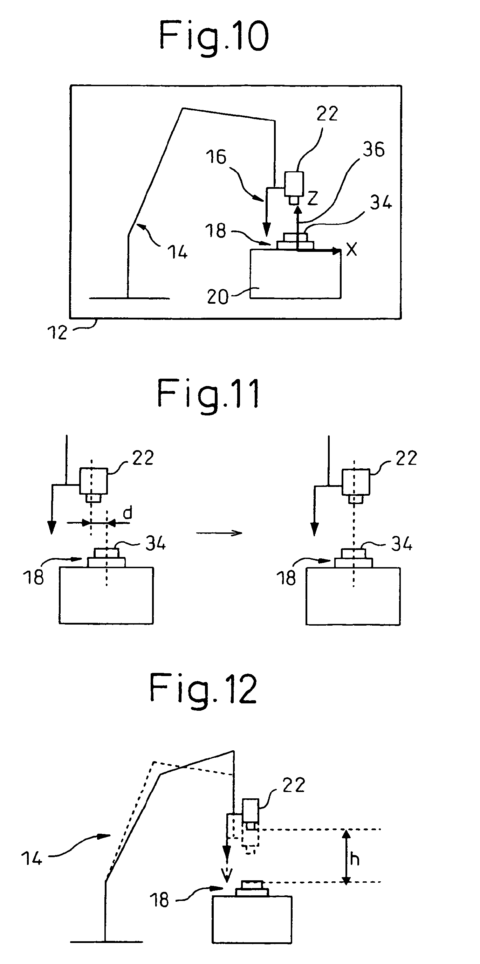

In the next step 522, a robot 14 is moved relative to a assigned workpiece 18 such that a virtual camera 22 of a vision sensor attached to a front end of a hand of the robot is moved generally directly above workpiece 18 and the orientation of virtual camera 22 is parallel to a processing surface 34 of workpiece 18, as shown in fig. 10. At this point, it is preferable that a calibration by which camera 22 may present the above position and orientation is executed based on an user coordinate system 36 (In Fig. 10, only X- and Z-axes are schematically indicated) including a X-Y plane parallel to processing surface 34.

Then, a graphic image of the three-dimensional model of workpiece 18 viewed from virtual camera 22 is indicated on display 12 of PC 10 (step S23), and the horizontal position of virtual camera 22 is adjusted such that processing surface 34 of the workpiece is positioned at the center of the image (step S24). Concretely, as shown in Fig. 11, a gap or displacement "d" between the center coordinate (for example, the center of gravity) of processing surface 34 and the center of an image obtained by virtual camera 22 (for example, the center of a lens of the camera) is calculated, and then the position and orientation of the robot are determined such that the center coordinate of processing surface 34 is positioned at the center of the graphic image of the three-dimensional model of workpiece 18 viewed from virtual camera 22.

In the next step S25, as shown in Fig. 12, the height of the position of virtual camera 22 is adjusted to a predetermined value "h" by operating robot 14. The height "h," defined as the distance from processing surface 34 to virtual camera 22, is predetermined such that virtual camera 22 can capture the whole of workpiece 18.

The height "h" may be set by a user or operator, otherwise, may be determined based on a calculation or an experience.

After the position and orientation of robot 14 by which virtual camera 22 can capture the whole of workpiece 18 are determined, an imager movement program for moving robot 14 to the determined position and orientation is generated. Further, a teaching point is generated in relation to the determined position and orientation (step S26).

Finally, a command or a program for capturing and detecting a workpiece to be imaged by using an actual vision sensor such as a camera is generated (step S27), and then the command or the program is inserted into the imager movement program.

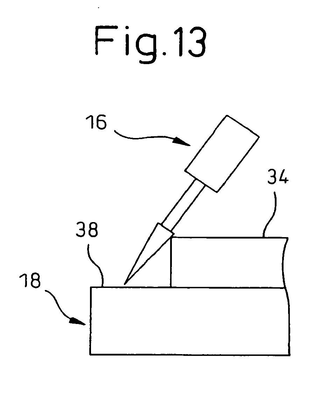

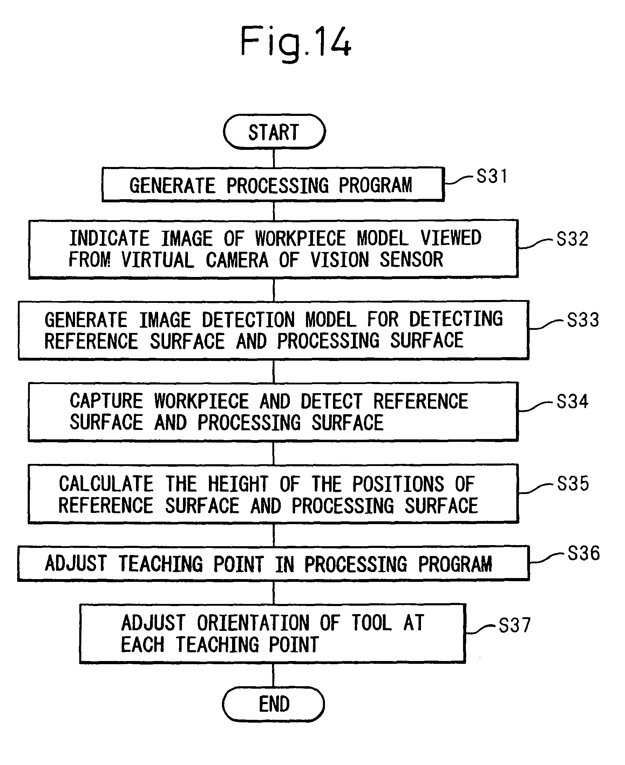

Depending on the shape of a workpiece to be processed or a tool, it may be necessary to adjust the position and orientation of the tool at each teaching point. For example, in a case that workpiece 18 has a step portion as shown in Fig. 13, when processing surface 34 or the upper surface of the step portion is to be processed by contacting tool 16 to processing surface 34, the tool may interfere with a reference surface 38 or the lower surface of the step portion, depending on the orientation of the tool. In such a case, it is necessary to modify the orientation of tool 16. Therefore, the modification of the position and/or orientation of the tool at the teaching point will be explained below, with reference to a flowchart as shown in Fig. 14.

First, in step S31, a processing line 28 of a workpiece 18 is assigned similarly in step S2 as described above, and then a processing program including data of a teaching point on processing line is generated. Similarly to the example of Fig. 5, three teaching points are set to the corner segment and one teaching point is set to the straight line segment. Then, a processing program, including a command line assigning the position of each teaching point and a processing speed at each teaching point, etc., is generated.

In the next step S32, a graphic image of the three-dimensional model of workpiece 18 viewed from virtual camera 22 is indicated on display 12 of PC 10. The positional relationship between the virtual camera and the workpiece may be the same as shown in Fg. 1.

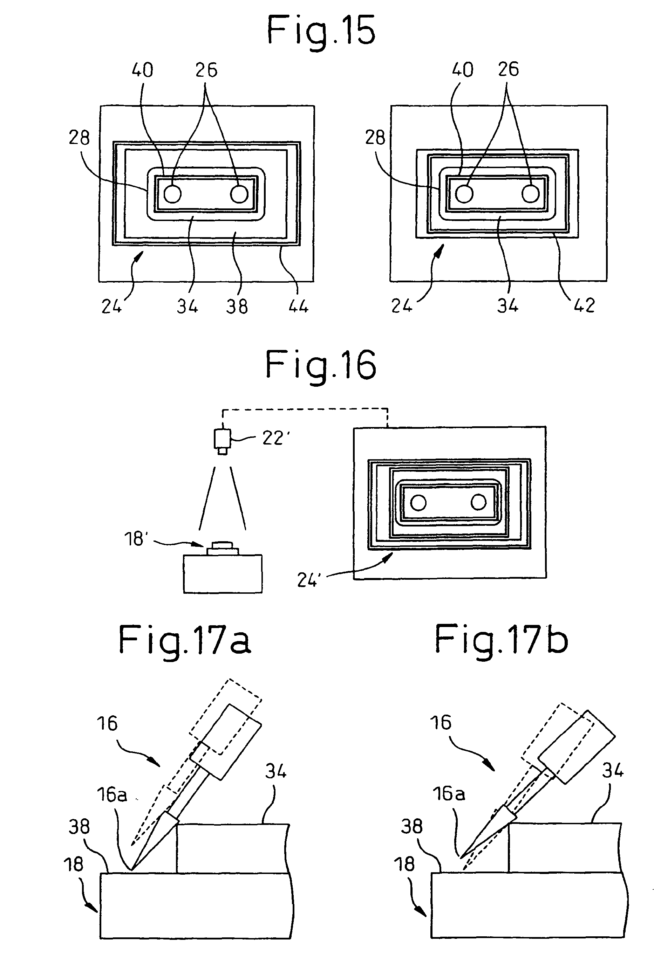

In the next step S33, an image detection model having a reference surface and a processing surface of workpiece 18 is generated, on a graphic image model 24 of the three-dimensional model of the workpiece viewed from virtual camera 22. Concretely, as illustrated in Fig. 15 by using double-lined frames, the image detection models includes a model 40 for detecting features or holes 26 of graphic image 24, a model 42 for detecting a processing surface 34 of the workpiece, and a model 44 for detecting a reference surface 38 of the workpiece. The height of the position of processing surface 34 relative to reference surface 38 may be obtained by using the three-dimensional model of the workpiece.

In the next step S34, a command or a program is generated, by which a workpiece 18' to be processed is actually imaged or captured by a vision sensor such as a camera 22', as shown in Fig. 16, and the reference surface and the processing surface of workpiece 18' corresponding to each detection model generated in step S33 are detected from a captured image 24' obtained by camera 22'. Further, the generated command or the program thus generated is inserted into the processing program.

In the next step 535, a command or a program, for calculating the heights of the positions of the reference surface and the processing surface of the workpiece to be processed, is generated. Concretely, the difference of the sizes or the amount of change between an image of the workpiece actually capture by using vision sensor 22' (Fig. 16) and the image detection model obtained by the virtual camera (Fig. 15) is calculated, in relation to each of the reference surface and the processing surface, and the size is converted into the height.

Finally, in step S36, the teaching point in the processing program is corrected based on the calculation result. In particular, as shown in Fig. 17a, the height of the position of each teaching point in the processing program is corrected such that tool 16 contacts processing surface 34 of workpiece 18, based on the calculated height of the position of the processing surface. Then, a clearance between a tool front point 16a of tool 16 and reference surface 38 of workpiece 18 is calculated based on the height of the position of the reference surface. When the clearance is not sufficient or smaller than a predetermined threshold (e.g., as indicated in Fig. 17a by a solid line), the tool may interfere with the reference surface in the actual processing. Therefore, as shown in Fig. 17b, the orientation of tool 16 at each teaching point is corrected (step S37), in order to make a clearance, between the tool and the reference surface, which is equal to or larger than the predetermined threshold.

It should be understood by a person with ordinary skill in the art that the procedures as shown in Figs. 2, 9 and 14 may be executed independently or in combination.

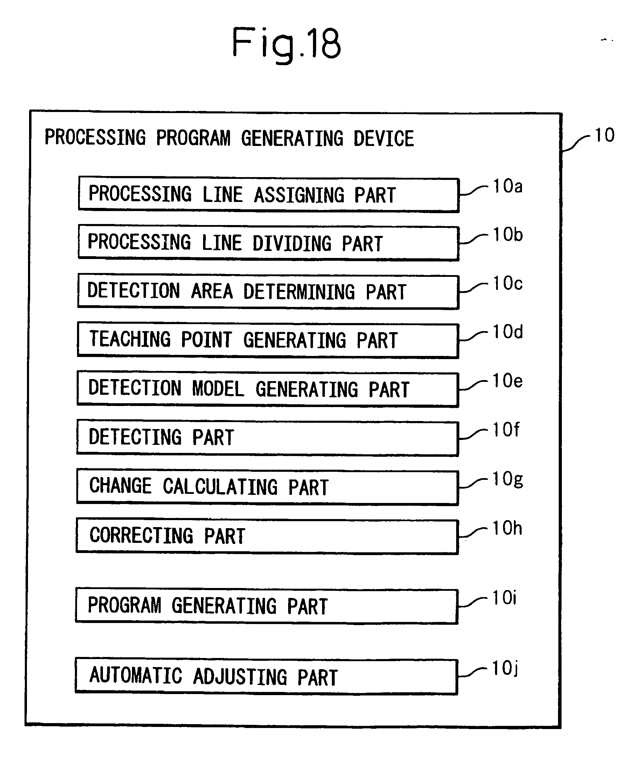

As described above, as shown in Fig. 18, program generating device 10 of the invention has
a processing line assigning part 10a for assigning a processing line on the three-dimensional model of the workpiece on the display;
a processing line dividing part 10b for dividing the processing line into a plurality of line segments;
a detection area determining part 10c for determining a plurality of detection areas, each including each segment obtained by the processing line dividing part, within a graphic image obtained by capturing the three-dimensional model of the workpiece by using the three-dimensional model of the vision sensor as a virtual camera;
a teaching point generating part 10d for generating a teaching point by which each segment of the processing line divided by processing line dividing part 10b is processed;
a detection model generating part 10e for generating an image detection model in each detection area based on the graphic image, such that the vision sensor may detect each detection area of the graphic image determined by detection area determining part 10c;
a detecting part 10f for reading an image obtained by actually capturing a workpiece to be processed by using a vision sensor, and detecting the position and the orientation of a portion of the workpiece corresponding to the image detection model;
a change calculating part 10g for calculating an amount of change between the position and the orientation of each image detection model and the position and the orientation of each teaching point included in the detection area corresponding to the image detection model; and
a correcting part 10h for correcting the position and the orientation of the teaching point included in the detection area corresponding to the image detection model, based on the amount of change.

Generating device 10 may further comprise a program generating part 10i for generating an imager movement robot program wherein the program generating part 10i being capable of assigning the three-dimensional model of the workpiece so as to move the robot to a position where the vision sensor mounted to the robot can capture the workpiece to be processed; moving the robot to a position and orientation so that the orientation of the vision sensor is parallel to a surface of the three dimensional model to be processed; calculating the position and orientation of the robot in which the vision sensor captures the center of the three dimensional model of the workpiece, based on the positional relationship between the three dimensional models of the vision sensor and the workpiece; and generating a teaching point by which the vision sensor captures the whole of the three dimensional model of the workpiece.

Generating device may further comprise an automatic adjusting part 10j for automatically adjusting the position and orientation of the teaching point by detecting the height of the surface of the workpiece to be processed from a reference surface of the workpiece by means of the vision sensor.

According to the generating device of the present invention, when the vision sensor is attached to the robot, the vision sensor attached to the robot may be used to generate a teaching point for capturing the workpiece, whereby man-hours required for the teaching operation may be significantly reduced.

By detecting the height of the position of the processing surface of the workpiece from the reference surface and automatically correcting the position and orientation of the teaching point based on the detection result, interference between the workpiece and the tool for processing the workpiece may be avoided.

## Claims

1. A method for correcting a processing robot program, by which three-dimensional models of a robot (14), a workpiece (18) and a vision sensor (22) are displayed on a display (12) and the robot (14) processes the workpiece (18), **characterized in that** the method comprises the steps of:
assigning a processing line (28) on the three-dimensional model of the workpiece (18) on the display (12);
dividing the processing line (28) into a plurality of line segments (28a, 28b);
determining a plurality of detection areas, each including each segment (28a, 28b), within a graphic image obtained by capturing the three-dimensional model of the workpiece (18) by using the three-dimensional model of the vision sensor as a virtual camera (22);
generating a teaching point by which each segment (28a, 28b) of the processing line (28) is processed;
generating an image detection model in each detection area based on the graphic image, such that the vision sensor (22) may detect each detection area of the graphic image;
reading an image obtained by actually capturing a workpiece (18') to be processed by using a vision sensor (22'), and detecting the position and the orientation of a portion of the workpiece (18') corresponding to the image detection model;
calculating an amount of change between the position and the orientation of each image detection model and the actually detected position and the orientation of i the portion the workpiece corresponding to the image detection model; and
correcting the position and the orientation of the teaching point included in the detection area corresponding to the image detection model, based on the amount of change.

2. The method according to claim 1, **characterized in that** the method further comprises the steps of generating an imager movement robot program wherein the three-dimensional model of the workpiece (18) is assigned so as to move the robot (14) to a position where the vision sensor (22) mounted to the robot (14) can capture the workpiece (18) to be processed; moving the robot (14) to a position and orientation so that the orientation of the vision sensor (22) is parallel to a surface (34) of the three dimensional model to be processed; calculating the position and orientation of the robot (14) in which the vision sensor (22) captures the center of the three dimensional model of the workpiece (18), based on the positional relationship between the three dimensional models of the vision sensor (22) and the workpiece (18); and generating teaching point by which the vision sensor (22) captures the whole of the three dimensional model of the workpiece (18).

3. The method according to claim 1, **characterized in that** the method further comprises a step of automatically adjusting the position and orientation of the teaching point by detecting the height of the surface (34) of the workpiece to be processed from a reference surface (38) of the workpiece (18) by means of the vision sensor (22).

4. A generating device of a processing robot program, comprising means for carrying out the method of any one of the preceding claims.

## Patentansprüche

1. Verfahren zum Korrigieren eines Bearbeitungs-Roboterprogramms, bei welchem dreidimensionale Modelle eines Roboters (14), eines Werkstücks (18) und einer Bildaufnahmeeinrichtung (22) auf einem Display (12) dargestellt werden und der Roboter (14) das Werkstück (18) bearbeitet,
**dadurch gekennzeichnet, dass** das Verfahren die Schritte umfasst:
- Bestimmen einer Bearbeitungsbahn (28) an dem dreidimensionalen Modell des Werkstücks (18) auf dem Display (12);
- Teilen der Bearbeitungsbahn (28) in eine Vielzahl von Bahnsegmenten (28a, 28b);
- Bestimmen einer Vielzahl von Ermittlungsbereichen, wobei jeder jedes Segment (28a, 28b) umfasst, innerhalb einer graphischen Darstellung, die durch Aufnehmen des dreidimensionalen Modells des Werkstücks (18) unter Verwendung des dreidimensionalen Modells der Bildaufnahmeeinrichtung als virtuelle Kamera (22) erhalten wurde;
- Erzeugen eines Anlernpunktes, von welchem jedes Segment (28a, 28b) der Bearbeitungsbahn (28) bearbeitet wird;
- Erzeugen eines Bildermittlungsmodells in jedem Ermittlungsbereich basierend auf der graphischen Darstellung, so dass die Bildaufnahmeeinrichtung (22) jeden Ermittlungsbereich der graphischen Darstellung ermitteln kann;
- Auslesen eines Bildes, das durch tatsächliches Aufnehmen eines zu bearbeitenden Werkstücks (18') unter Verwendung einer Bildaufnahmeeinrichtung (22') erhalten wurde, und Ermitteln der Position und der Ausrichtung eines Teil des Werkstücks (18') entsprechend dem Bildermittlungsmodell;
- Berechnen eines Änderungsbetrags zwischen der Position und der Ausrichtung jedes Bildermittlungsmodells und der tatsächlich ermittelten Position und der Ausrichtung des Teils des Werkstücks entsprechend dem Bildermittlungsmodell; und
- Korrigieren der Position und der Ausrichtung des in dem Ermittlungsbereich enthaltenen Anlernpunktes entsprechend dem Bildermittlungsmodell, basierend auf dem Änderungsbetrag.

2. Verfahren nach Anspruch 1,
**dadurch gekennzeichnet, dass** das Verfahren weiter die Schritte umfasst: Erzeugen eines Bildwandelbewegungsroboterprogramms, wobei das dreidimensionale Modell des Werkstücks (18) bestimmt ist, den Roboter (14) zu einer Position zu bewegen, in welcher die an dem Roboter (14) befestigte Bildaufnahmeeinrichtung (22) das zu bearbeitende Werkstück (18) aufnehmen kann; Bewegen des Roboters (14) in eine Position und Ausrichtung, so dass die Ausrichtung der Bildaufnahmeeinrichtung (22) parallel zu einer Oberfläche (34) des zu bearbeitenden dreidimensionalen Modells ist; Berechnen der Position und der Ausrichtung des Roboters (14), in welcher die Bildaufnahmeeinrichtung (22) die Mitte des dreidimensionalen Modells des Werkstücks (18) aufnimmt, basierend auf der Positionsbeziehung zwischen den dreidimensionalen Modellen der Bildaufnahmeeinrichtung (22) und des Werkstücks (18); und Erzeugen eines Anlernpunkts, bei welchem die Bildaufnahmeeinrichtung (22) das komplette dreidimensionale Modell des Werkstücks (18) aufnimmt.

3. Verfahren nach Anspruch 1,
**dadurch gekennzeichnet, dass** das Verfahren weiter den Schritt des automatischen Einstellens der Position und Ausrichtung des Anlernpunkts durch Ermitteln der Höhe der Oberfläche (34) des zu verarbeitenden Werkstücks von einer Bezugsoberfläche (38) des Werkstücks (18) mittels der Bildaufnahmeeinrichtung (22) umfasst.

4. Erzeugungsvorrichtung eines Bearbeitungs-Roboterprogramms, umfassend Mittel zum Ausführen des Verfahrens nach einem der vorhergehenden Ansprüche.

## Revendications

1. Procédé de correction d'un programme de robot de traitement, par lequel des modèles tridimensionnels d'un robot (14), d'une pièce à usiner (18) et d'un capteur de vision (22) sont affichés sur un affichage (12) et le robot (14) traite la pièce à usiner (18), **caractérisé en ce que** le procédé comprend les étapes de :
attribution d'une ligne de traitement (28) sur le modèle tridimensionnel de la pièce à usiner (18) sur l'affichage (12) ;
division de la ligne de traitement (28) en une pluralité de segments (28a, 28b) de ligne ;
détermination d'une pluralité de zones de détection, chacune incluant chaque segment (28a, 28b), au sein d'une image graphique obtenue par capture du modèle tridimensionnel de la pièce à usiner (18) en utilisant le modèle tridimensionnel du capteur de vision comme une caméra virtuelle (22) ;
génération d'un point d'apprentissage par lequel chaque segment (28a, 28b) de la ligne de traitement (28) est traité ;
génération d'un modèle de détection d'image dans chaque zone de détection sur la base de l'image graphique, de telle sorte que le capteur de vision (22) peut détecter chaque zone de détection de l'image graphique ;
lecture d'une image obtenue par capture effective d'une pièce à usiner (18') devant être traitée en utilisant un capteur de vision (22'), et en détectant la position et l'orientation d'une partie de la pièce à usiner (18') correspondant au modèle de détection d'image ;
calcul d'une quantité de changement entre la position et l'orientation de chaque modèle de détection d'image et la position et l'orientation effectivement détectées de la partie de la pièce à usiner correspondant au modèle de détection d'image ; et
correction de la position et de l'orientation du point d'apprentissage inclus dans la zone de détection correspondant au modèle de détection d'image, sur la base de la quantité de changement.

2. Procédé selon la revendication 1, **caractérisé en ce que** le procédé comprend en outre les étapes de génération d'un programme de robot à mouvement d'imageur dans lequel le modèle tridimensionnel de la pièce à usiner (18) est attribué de manière à déplacer le robot (14) jusqu'à une position où le capteur de vision (22) monté sur le robot (14) peut capturer la pièce à usiner (18) devant être traitée ; de déplacement du robot (14) jusqu'à une position et une orientation de telle manière que l'orientation du capteur de vision (22) est parallèle à une surface (34) du modèle tridimensionnel devant être traité ; de calcul de la position et de l'orientation du robot (14) dans lesquelles le capteur de vision (22) capture le centre du modèle tridimensionnel de la pièce à usiner (18), sur la base de la relation positionnelle entre les modèles tridimensionnels du capteur de vision (22) et de la pièce à usiner (18) ; et de génération d'un point d'apprentissage par lequel le capteur de vision (22) capture la totalité du modèle tridimensionnel de la pièce à usiner (18).

3. Procédé selon la revendication 1, **caractérisé en ce que** le procédé comprend en outre une étape d'ajustement automatique de la position et de l'orientation du point d'apprentissage par détection de la hauteur de la surface (34) de la pièce à usiner devant être traitée par rapport à une surface de référence (38) de la pièce à usiner (18) au moyen du capteur de vision (22).

4. Dispositif de génération d'un programme de robot de traitement, comprenant un moyen pour mettre en oeuvre le procédé selon l'une quelconque des revendications précédentes.
